# FASCICULE DE BREVET EUROPEEN

(11) **EP 4 183 254 B1**
(45) Date de publication et mention de la délivrance du brevet: **23.07.2025**
(21) Numéro de dépôt: 22208716.5
(22) Date de dépôt: 22.11.2022
(51) Int. Cl.: A21C 5/08

(54) **DIVISEUSE DE PÂTE COMPACTE**
KOMPAKTE TEIGTEILMASCHINE
COMPACT DOUGH SPLITTER

(30) Priorité: 22.11.2021 BE 202105903
(43) Date de publication de la demande: 24.05.2023
(73) Titulaire: JAC S.A., 4000 Liège (BE)
(72) Inventeur: Van Cauwenberghe, Baudouin, 4000 Liège (BE)
(74) Mandataire: Callewaert, Koen

(56) Documents cités:
- CA-A1- 2 002 391
- DE-B3- 102006 024 345
- DE-C- 533 244
- DE-C- 583 302
- FR-A- 1 245 535
- FR-A- 966 883
- FR-A1- 2 516 749
- NL-A- 8 101 238
- US-A- 1 944 112
- US-A- 4 190 410

## Description

L'invention concerne une diviseuse de pâte pour découper une masse de pâte en pâtons. Cette diviseuse comprend une cuve avec une ouverture d'accès et un fond. La diviseuse présente également un dispositif de division avec une grille comprenant des lames de coupe pour diviser la masse de pâte, présent sur le fond de la cuve, en pâtons.

Un dispositif d'entrainement est prévu qui permet de déplacer le fond et la grille l'un par rapport à l'autre, suivant une direction sensiblement verticale, pour permettre de pousser les lames de coupe de la grille à travers la masse de pâte pour former les pâtons.

Dans cette diviseuse, le fond et la grille peuvent s'étendre sensiblement parallèlement l'un à l'autre et sont déplaçable entre une position éloignée dans laquelle la masse de pâte peut reposer sur le fond de la cuve sans que les lames de coupe ne traversent la masse de pate, et une position rapprochée dans laquelle les lames de coupe traversent la masse de pâte lorsque celle-ci repose sur le fond de la cuve.

De telles diviseuses de pâte connues dans l'art antérieur de la technologie. Les documents FR 1188901, FR 1312602, FR 2956950, FR 2916321, FR1284058, FR 1200843 et EP 2412244 décrivent, par exemple, des diviseuses avec un dispositif d'entrainement électrique ou hydraulique. Les diviseuses divulguées, par exemple, par les documents FR935714, FR 966883, FR1016400, US 1796102 et FR 1145623 présentent un entrainement manuel.

L'inconvénient des diviseuses existantes est qu'elles sont relativement grandes et encombrantes avec une construction relativement complexe. De plus, l'entrainement de ces diviseuses ne tient pas compte de la force variable nécessaire pour diviser la masse de pâte en pâtons.

L'invention veut remédier à ces inconvénients en proposant une diviseuse de taille relativement limitée, facilement déplaçable et dotée d'un entrainement relativement simple. De plus, l'invention vise à faire en sorte que la force fournie par le dispositif d'entrainement est automatiquement adaptée à la force nécessaire pour diviser la masse de pâte en pâtons.

A cet effet, le dispositif d'entrainement comprend au moins deux branches croisées placées entre une structure de support solidaire du châssis et une structure entrainée. Cette structure entrainée comprend le fond de la cuve ou ladite grille et est, de préférence, supportée par une extrémité supérieure d'une première branche et une extrémité supérieure d'une seconde branche. Lesdites branches se croisent sur un axe de pivotement et sont interconnectées avec la possibilité de pivoter autour de cet axe. Dans cette diviseuse, des moyens d'entrainement sont prévus qui permettent d'approcher ou d'éloigner une extrémité de la première branche par rapport à une extrémité de la seconde branche pour faire monter ou descendre ladite structure entrainée pour déplacer le fond et la grille entre la position rapprochée et la position éloignée.

En particulier, le dispositif d'entrainement peut comprendre un premier et un second jeu de branches et lesdites branches se croisent sur ledit axe de pivotement. Donc les moyens d'entrainement sont prévus pour permettre d'approcher ou d'éloigner les extrémités des branches du premier jeu de branches par rapport à des extrémités des branches du deuxième jeu de branches pour faire monter ou descendre ladite structure entrainée pour déplacer le fond et la grille entre la position rapprochée et la position éloignée.

Avantageusement, les moyens d'entrainement comprennent une roue dentée présentant un axe central d'entrainement et un élément cranté dont l'un est fixé par rapport au châssis et l'autre est fixé à une extrémité des branches d'un des jeux de branches. Ainsi, la roue dentée coopère avec l'élément cranté de sorte à ce que, lorsque la roue est entrainée autour de son axe d'entrainement, lesdites extrémités des branches du premier jeu de branches sont déplacées par rapport aux celles du deuxième jeu de branches.

Suivant une forme de réalisation préférentielle de la diviseuse, suivant l'invention, l'axe d'entrainement de la roue dentée s'étend à une position fixe par rapport au châssis, tandis que l'élément cranté est solidaire d'au moins une branche d'un des jeux de branches.

Suivant une forme de réalisation alternative, l'élément cranté est fixe par rapport au châssis, tandis que la roue dentée est montée à l'extrémité inférieure d'au moins une branche d'un des jeux de branches.

Généralement, l'axe d'entrainement de la roue dentée s'étend parallèlement à l'axe de pivotement, suivant l'invention.

Suivant une forme de réalisation avantageuse de l'invention, l'axe d'entrainement susdit est connecté à un levier permettant d'entrainer la roue dentée autour de cet axe d'entrainement pour faire monter ou descendre ladite structure supérieure manuellement.

Suivant une variante de cette forme de réalisation de la diviseuse, l'axe d'entrainement est connecté à un moteur permettant d'entrainer la roue dentée autour de cet axe pour faire monter ou descendre ladite structure supérieure manuellement.

Suivant une forme de réalisation intéressante de la diviseuse, suivant l'invention, les branches du premier jeu sont réunies par une extrémité à la structure entrainée au moyen d'un premier pivot à position fixe par rapport à cette structure entrainée et coopèrent à leur autre extrémité avec les moyens d'entrainement. Les branches du second jeu de branches sont réunies par une extrémité à la structure de support au moyen d'un second pivot à position fixe par rapport au châssis. A leur autre extrémité, ces branches du second jeu sont munies d'un moyen de roulement pour pouvoir se déplacer le long de la structure entrainée.

De préférence, la structure entrainée présente une glissière ou une fente pour guider l'extrémité des branches du deuxième jeu, en particulier pour guider le moyen de roulement, lors de la monté ou descente de la structure entrainée

D'autres détails et particularités de l'invention ressortiront de la description donnée ci-après, à titre d'exemple non limitatif, de quelques formes de réalisation particulières de l'invention et du procédé, suivant l'invention, avec référence aux dessins annexés.
La figure 1 est une vue schématique en perspective d'une diviseuse de pâte, suivant l'invention, avec une grille qui est dans sa position ouverte.
La figure 2 est une vue schématique en perspective de la diviseuse de pâte de la figure 1 lorsque la grille est dans sa position fermée.
La figure 3 est une coupe verticale de la diviseuse des figures 1 et 2 d'une partie de cette diviseuse, lorsque la grille est dans sa position fermée et le fond mobile est descendu dans la position éloignée.
La figure 4 est une coupe analogue à celle de la figure 3, lorsque le fond mobile est élevé dans la position rapprochée.
La figure 5 est une coupe verticale suivant la ligne V-V de la figure 3 de la diviseuse de pâte, suivant l'invention.
La figure 6 est une coupe verticale analogue à celle de la figure 5, suivant la ligne VI-VI de la figure 4 de la diviseuse de pâte, suivant l'invention.
La figure 7 est une vue en perspective du fond de la cuve avec le dispositif d'entrainement d'une diviseuse de pâte suivant une forme de réalisation particulièrement intéressante de l'invention.
La figure 8 représente une section horizontale suivant le plan VIII-VIII de la figure 7 d'une partie du dispositif d'entrainement de cette diviseuse.
La figure 9 est une vue analogue à celle de la figure 5 d'une deuxième forme de réalisation de la diviseuse suivant l'invention.
La figure 10 est une vue analogue à celle de la figure 6 de cette deuxième forme de réalisation de la diviseuse.
La figure 11 est une vue analogue à celles des figures 6 et 10 d'une troisième forme de réalisation de la diviseuse, suivant l'invention.
La figure 12 est une coupe verticale de la diviseuse des figures 1 et 2 analogue à celle de la figure 3 suivant la ligne XII-XII de la figure 14, d'encore une autre forme de réalisation de la diviseuse, suivant l'invention, lorsque le fond mobile est dans la position éloignée.
La figure 13 est une coupe analogue à celle de la figure 12 suivant la ligne XIII-XIII de la figure 15, lorsque le fond mobile est élevé dans la position rapprochée.
La figure 14 est une coupe verticale suivant la ligne XIV-XIV de la figure 12 de la diviseuse de pâte, suivant l'invention.
La figure 15 est une coupe verticale analogue à celle de la figure 14, suivant la ligne XV-XV de la figure 13 de la diviseuse de pâte, suivant l'invention.

Dans les différentes figures, les mêmes chiffres de référence se rapportent aux mêmes éléments ou à des éléments analogues.

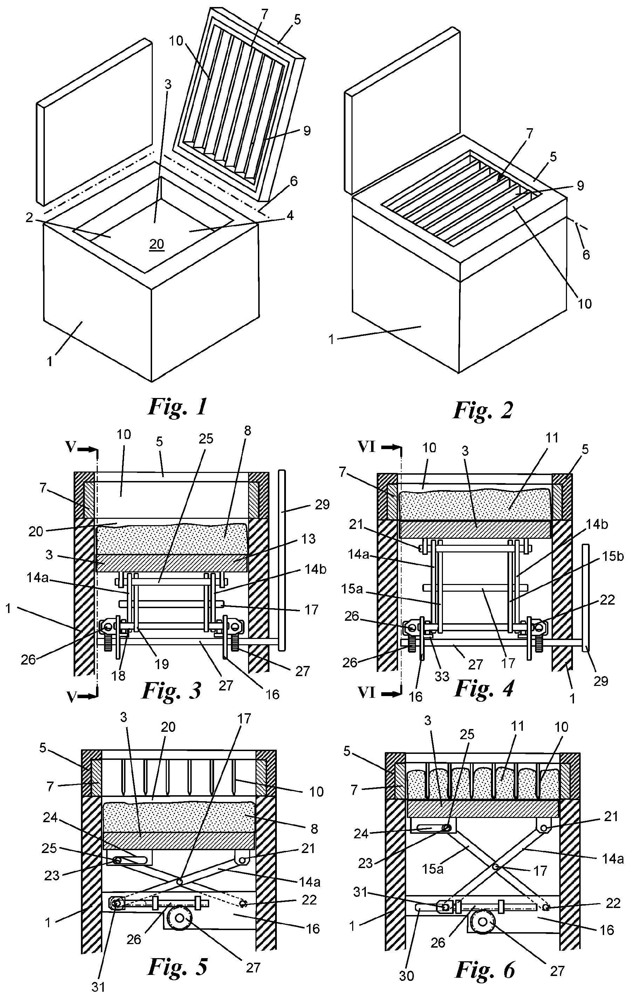

La diviseuse de pâte, suivant l'invention, est destinée à découper une masse de pâte en pâtons. Cette machine, suivant une forme de réalisation intéressante de l'invention, est représentée schématiquement aux figures 1 à 8 et comprend un châssis 1 avec une cuve 2 pourvue d'un fond mobile 3 qui est déplaçable suivant une direction sensiblement verticale. Le côté supérieur de la cuve 2 présente une ouverture d'accès 4. Un cadre 5 est articulé sur le bord supérieur de la cuve 2 de manière à pouvoir subir une rotation autour d'un axe 6.

Une grille 7 est fixée dans ce cadre 5 et peut être déplacée, ensemble avec le cadre 5, entre une position ouverte, comme représentée dans la figure 1, et une position fermée, comme montrée à la figure 2. Dans la position ouverte, l'ouverture d'accès 4 est ouverte de sorte qu'une masse de pâte 8 peut être posée sur le fond mobile 3 dans la cuve 2. Lorsque des pâtons 11 ont été formés, ceux-ci peuvent être enlevés de la cuve 2 dans cette position ouverte. Dans la position fermée de la grille 7, le cadre 5 repose sur le bord supérieur de la cuve 2 et la grille 7 couvre l'ouverture d'accès 4 en s'étendant au-dessus du fond mobile 3.

La grille 7 présente des mailles 9 définies par des lames de coupe 10 pour diviser la masse de pâte 8 en pâtons. Dans la forme de réalisation de la diviseuse représentée dans les figures, les lames de coupe 10 de la grille 7 s'étendent parallèlement les unes aux autres, de sorte que la grille 7 présente des mailles 9 oblongues parallèles. Il va de soi que la grille 7 peut également comprendre un entrecroisement de lames de coupe 10. La grille 7, qui est représentée aux figures, présente une forme rectangulaire, mais peut également être circulaire ou présenter encore une autre forme.

Ainsi, la grille 7 constitue un dispositif de division pour diviser la masse de pâte 8 en pâtons 11. Des moyens de fixation pour monter la grille 7, de préférence, d'une manière amovible dans le cadre 5 sont connus par l'homme du métier et ne sont pas représentés aux figures. Il en est de même pour des moyens destinés à attacher le cadre 5 et la grille 7 au bâti lorsque la grille 7 est dans sa position fermée. Lesdits moyens de fixation permettent de mouvoir simultanément le cadre 5 et la grille 7 entre la position ouverte et la position fermée.

La diviseuse comprend un dispositif d'entrainement 12 pour déplacer le fond 3 et la grille 7 l'un par rapport à l'autre. Dans la forme de réalisation de l'invention montrée aux figures 1 à 8, le dispositif d'entrainement 12 permet entraîner le fond 3 dans la cuve 2 afin de le déplacer suivant une direction verticale.

Pour découper une masse de pâte 8 en pâtons 11, le cadre 5 et la grille 7 sont déplacés vers leur position ouverte, comme montré dans la figure 1 pour rendre la cuve 2 accessible. Une quantité calibrée de pâte 8 est alors répartie sur le fond 3 et l'ensemble du cadre 5 et de la grille 7 est déplacé vers la position fermée comme montré dans les figures 3 et 5 et le cadre 5 avec la grille 7 est verrouillé à la cuve, en particulier, au châssis 1.

Le fond 3 de la cuve 2 et la grille 7, lorsque cette dernière est dans la position fermée, peuvent être déplacés entre une position éloignée et une position rapprochée l'un par rapport à l'autre. Dans la position éloignée, comme illustrée par les figures 3 et 5, un espace 20 est présent au-dessus du fond 3, et en-dessous de la grille 7, permettant de recevoir la masse de pâte 8. Lorsque la cuve 2 et la grille 7 sont dans la position rapprochée, comme le montrent les figures 4 et 6, la grille 7 traverse ledit espace 20 au-dessus du fond 3 et découpe la masse de pâte 8 y présent en pâtons 11. Dans la forme de réalisation de la diviseuse représentée aux figures, la surface supérieure du fond 3 est adjacente au côté inférieur de la grille 7 dans la position rapprochée.

Ainsi, pour former les pâtons 11, le fond 3 de la cuve 2 est monté par le dispositif d'entrainement 12 jusque contre la grille 7 en faisant traverser la pâte 8 à travers les mailles 8 de la grille 5, comme illustré par les figures 4 et 6.

Ensuite, l'ensemble du cadre 5 et de la grille 7 est déplacé vers la position ouverte pour enlever les pâtons 11 du fond 3 de la cuve 2.

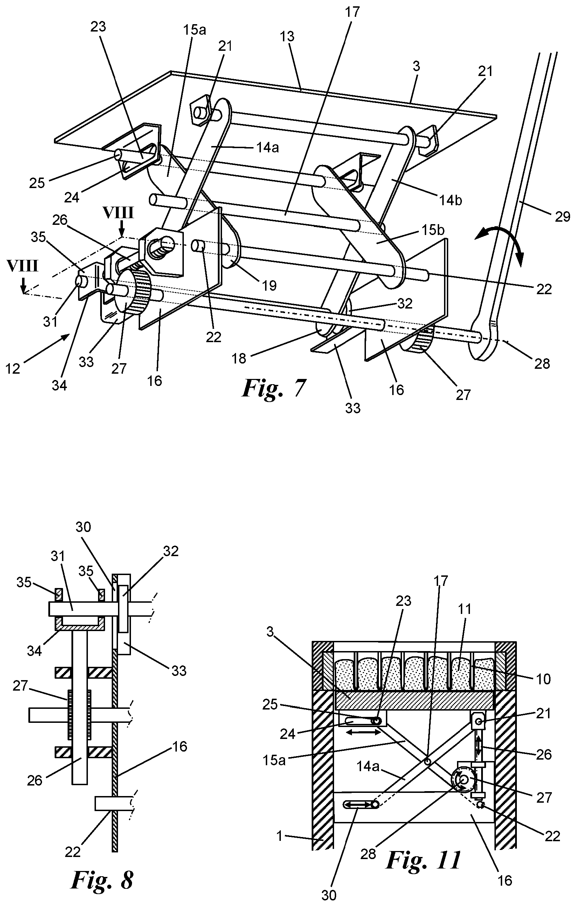

La figure 7 montre une vue en perspective du dispositif d'entrainement 12 avec le fond 3 de la cuve 2. Le fond 3 constitue donc une structure entrainée 13 qui peut être déplacée verticalement par l'action du dispositif d'entrainement 12.

En général, le dispositif d'entrainement 12 comprend une table mobile du type à ciseaux avec un premier 14 et un second jeu de branches 15. Une telle table mobile est dans certains cas également nommée une table élévatrice. Le premier jeu de branches 14 présente deux branches parallèles 14a et 14b et le deuxième jeu de branches 15 comprend également deux branches parallèles 15a et 15b. De préférence, les branches 14a, 14b, 15a et 15b s'étendent suivant des plans qui sont parallèles les uns aux autres et qui s'étendent sensiblement perpendiculairement par rapport au fond 3 de la cuve 2.

Les branches 14a et 14b du premier jeu 14 et les branches 15a et 15b du deuxième jeu de branches 15 se croisent sur un axe de pivotement 17 et sont donc interconnectées par cet axe 17. Ainsi, les branches du premier jeu de branches 14 peuvent pivoter par rapport aux branches du deuxième jeu 15 autour de cet axe 17. L'axe de pivotement 17 s'étend de préférence sensiblement parallèlement au fond 3 de la cuve 2.

De préférence, les branches du premier jeu 14 se déplacent symétriquement par rapport aux branches du deuxième jeu de branches 15 par rapport à un plan vertical comprenant l'axe de pivotement 17.Comme illustré dans les figures, les branches 14a, 14b, 15a et 15b du dispositif d'entrainement 12 sont placées entre ladite structure entrainée 13 et une structure de support 16 solidaire du châssis 1.

Le dispositif d'entrainement 12 comprend des moyens d'entrainement qui permettent d'approcher ou d'éloigner les extrémités des branches 14a et 14b du premier jeu de branches 14 par rapport à des extrémités des branches 15a et 15b du deuxième jeu de branches 15 pour faire monter ou descendre la structure entrainée 13, en particulier pour déplacer le fond 3 et la grille 7 entre la position rapprochée et la position éloignée. En déplaçant ces extrémités des branches du premier jeu 14 par rapport aux extrémités du deuxième jeu 15, les branches 14a et 14b pivotent autour de l'axe 17 par rapport aux branches 15a et 15b.

Dans la forme de réalisation représentée aux figures 3 à 7 du dispositif d'entrainement 12, les extrémités inférieures 18 des branches 14a et 14b sont approchées des extrémités inférieures 19 des branches 15a et 15b pour faire monter le fond 3 de la cuve 2 vers la position rapprochée. Pour déplacer ce fond 3 vers ladite position éloignée, ces extrémités inférieures 18 et 19 sont éloignées les unes par rapport aux autres.

Lorsque les branches des jeux de branches 14 et 15 sont pivotées les unes par rapport aux autres autour de l'axe 17, ces branches subissement également un pivotement par rapport à la structure entrainée 13, en particulier par rapport au fond 3 de la cuve 2. Afin de rendre ceci possible, les branches 14a et 14b du premier jeu 14 sont réunies par leur extrémité supérieure à cette structure entrainée 13 au moyen d'un premier pivot 21 à position fixe par rapport à cette structure entrainée 13. L'autre extrémité 19 de ces branches 14a et 14b coopère avec lesdits moyens d'entrainement.

Les branches 15a et 15b du second jeu de branches 15 sont réunies par leur extrémité supérieure à la structure de support 16 au moyen d'un second pivot 22 à position fixe par rapport au châssis 1. L'extrémité opposée de ces branches 15a et 15b est munie d'un moyen de roulement 23 pour pouvoir se déplacer le long de la structure entrainée 13. Dans la forme de réalisation représentée dans les figures, le moyen de roulement 23 comprend une tige 25 qui relie les extrémités supérieure des branches 15a et 15b du deuxième jeu de branches 15. Cette tige 25 est guidée par une glissière ou une fente 24 prévue au côté inférieure de la structure entrainée, en particulier du fond 3, afin de permettre le mouvement de l'extrémité supérieure des branches 15a et 15b du deuxième jeu de branches 15 sensiblement parallèlement au fond 3 de la cuve 2 lors de l'entrainement de celui-ci par le dispositif d'entrainement 12. Il est également possible que le moyen de roulement 23 peut comprendre des petites roues fixées à l'extrémité concernée des branches 15a et 15b et guidées par la face inférieure de la structure entrainée 13.

Les moyens d'entrainement susdits, qui permettent de déplacer l'extrémité 18 des branches 14a et 14b, comprennent un élément cranté oblongue 26 qui est fixé à l'extrémité inférieure 18 des branches 14a et 14b du premier jeu de branches 14. Cet élément oblongue 26 s'étend, de préférence, sensiblement horizontalement et coopère avec une roue dentée 27 présentant un axe central d'entrainement 28. La roue dentée 27, en particulier son axe central d'entrainement 28, est à une position fixe par rapport au châssis 1.

Ainsi, lorsque la roue dentée 27 est entrainée autour de l'axe d'entrainement 28, cette roue 27 déplace l'élément cranté 26 suivant la direction longitudinal de ce dernier en déplaçant, par conséquent, l'extrémité 18 de la branche 14a ou 14b correspondante fixée à l'élément cranté 26. Donc, suite à l'entrainement de la roue dentée 27 autour de son axe 28, les extrémités 18 des branches 14a et 14b du premier jeu de branches 14 sont déplacées par rapport aux extrémités 19 des branches 15a et 15b du deuxième jeu de branches 15.

Lorsque ces extrémités 18 et 19 se rapprochent, la structure entrainée 13 se déplace suivant un mouvement montant de sorte que le fond 3 et la grille 7 sont déplacés vers ladite position rapprochée. Lorsque le mouvement des extrémités 18 et 19 est inversé en entrainant la roue dentée 27 dans le sens opposé, la structure entrainée 13 descend et le fond 3 et la grille 7 sont déplacés vers leur position éloignée.

L'élément cranté 26 comprend, en particulier, une crémaillère avec laquelle la roue dentée 27 s'engrène.

L'axe d'entrainement 28 de la roue dentée 27 est connecté à un levier 29 qui s'étend en dehors du châssis 1. Au moyen de ce levier 29, un opérateur peut donc entrainer la roue dentée 27 autour de l'axe central d'entrainement 28 pour manuellement faire monter ou descendre ladite structure entrainée 13.

Pour permettre ce déplacement des extrémités inférieures 18 et 19 des jeux de branches 14 et 15 les unes par rapport aux autres, le second pivot 22 de la branche 15a ou 15b est à une position fixe par rapport au châssis 1, tandis que l'extrémité inférieure 18 de la branche 14a ou 14b est mobile. Cette dernière extrémité 18 est attachée à l'élément cranté 26 et connectée à une tige 30 qui est sensiblement parallèle à l'axe de pivotement 17. La tige 30 est guidée par une fente oblongue 31 s'étendant horizontalement qui est prévue à cet effet dans la structure de support 16.

Comme il suit clairement des figures 7 et 8, la tige 30 présente également une roue coaxiale 32 qui est guidée par une surface de support 33 s'étendant horizontalement à partir de la structure de support 16 et sensiblement parallèlement à la direction longitudinale de la fente 31.

Ainsi, lorsqu'un opérateur veut faire monter le fond 3 de la cuve 2 pour découper une masse de pâte 8 en pâtons 11, il tourne le levier 29 autour de l'axe 28 pour entrainer la roue dentée 27. L'élément crantée 26, en particulier la crémaillère, se déplace alors, suite à la rotation de la roue dentée 27, suivant sa direction longitudinale et emporte l'extrémité inférieure 18 de la branche 14a ou 14b. Lors de ce déplacement, la tige 31 est guidée par la fente 30 pendant que la roue 32 est supportée par la surface de support 33 lors de son déplacement.

L'extrémité de la branche 14a ou 14b est fixée à l'élément cranté 26 au moyen de la tige 31 et une pièce de connexion 34 en forme de U. La base de cette pièce 34 est attachée à une extrémité de l'élément cranté 26, tandis que la tige 31 traverse les jambes 35 opposées de la pièce 34 en forme de U.

De préférence un rapport de transmission de l'engrenage entre l'élément cranté 26 et la roue dentée 27 est choisi telle à ce que la structure entrainée 13 est déplacée suivant une distance verticale qui est au moins égale à la distance entre le fond 3 de la cuve 2 et le côté inférieur de la grille 7 dans la position éloignée, lorsque la roue dentée 27 ou le levier 29 sont tournés d'un angle inférieur à 180°, en particulier inférieur à 90°.

Lorsque l'opérateur a déplacé le fond 3 de la cuve 2 vers ladite position rapprochée pour découper la pâte 8 en pâtons, il est préférable de maintenir le fond 3 dans cette position après que l'opérateur a relâché le levier 29 pour ouvrir la grille 7 et pour enlever les pâtons 11. A cet effet, la diviseuse comprend des moyens de maintien permettant de maintenir le fond 3 et la grille 7 dans ladite position rapprochée lorsque le dispositif d'entrainement n'est pas actionné. Ces moyens de maintien comprennent, par exemple, un ressort qui agit entre les branches 14a, 14b du premier jeu de branches 14 et les branches 15a ,15b du deuxième jeu de branches 15.

Un tel ressort assure que le fond 2 ne se déplace plus après que le dispositif d'entrainement 12 n'est plus activé, en particulier, après que la roue dentée 27 n'est plus entrainée autour de son axe central d'entrainement 28. Lorsque le levier 29 est entrainé dans le sens inverse, une force est exercée contre l'action du ressort et le fond 3 se déplace vers sa position éloignée. Il va de soi que d'autres moyens de maintien peuvent être prévus, comme, par exemple, un verrou ou un système de serrage du fond 3 dans ladite position rapprochée.

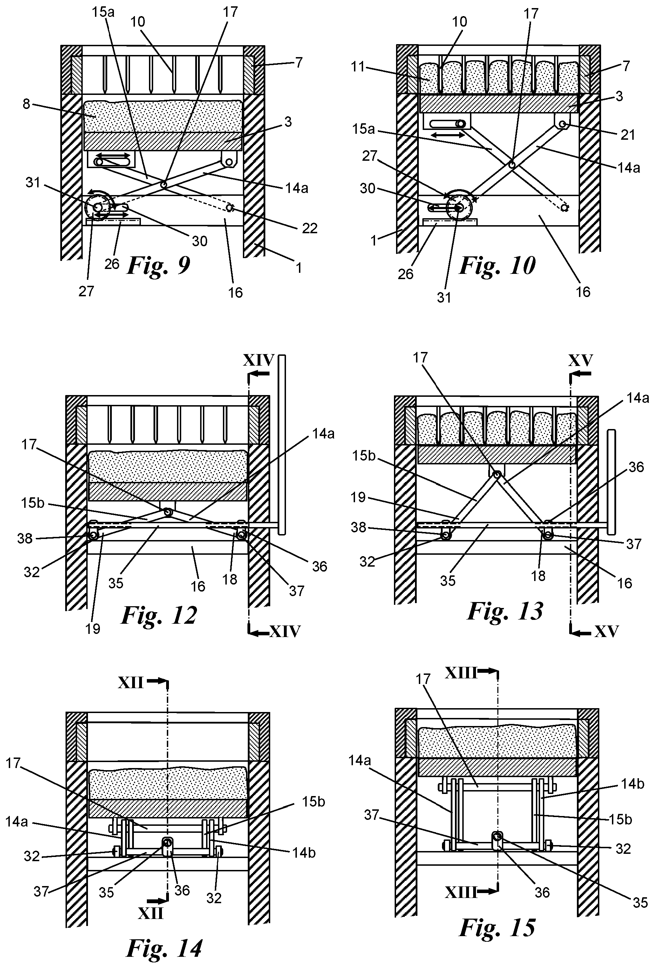

Une autre forme de réalisation de la diviseuse, suivant l'invention, est représentée schématiquement dans les figures 9 et 10. Cette diviseuse est différente de la précédente en ce que l'élément cranté 26 est fixe par rapport au châssis 1, tandis que la roue dentée 27 est montée à l'extrémité inférieure 18 d'une branche 14a d'un des jeux de branches. Lorsque la roue dentée 27 est entrainée autour de son axe au moyens de, par exemple, un levier, cette roue se déplace le long de l'élément cranté formé par une crémaillère qui est fixé à la structure de support 16. L'extrémité inférieure 18 de la branche 14a est donc déplacée ensemble avec cette roue 27, et le levier, le long de la fente 24 de sorte que la structure entrainée 13, en particulier, le fond 3 de la cuve 2, se déplace verticalement.

La figure 11 montre encore une autre forme de réalisation de la diviseuse suivant l'invention, qui est différente par rapport aux autres formes de réalisation en ce que l'élément cranté 26 coopérant avec la roue dentée 27 est prévue entre les extrémités des branches 14a et 15a. Ces extrémités s'étendent l'une au-dessus de l'autre. Ainsi, l'élément cranté 26 est attaché au pivot 21 et s'étend sensiblement verticalement, tandis que la roue dentée 27 présente une position fixe par rapport à la structure de support 16 et donc par rapport au châssis 1.

Les figures 12 à 15 concernent une forme de réalisation de la diviseuse, suivant l'invention, dans laquelle les branches 14a, 14b, 15a et 15b se croisent à leur extrémité supérieure avec l'axe de pivotement 17. Cette axe de pivotement 17 est fixé au côté inférieur du fond 3. Les extrémités libres des branches 14a, 14b, 15a et 15b prennent appui sur une surface horizontale 33 de la structure de support 16 au moyens de roues de guidage 32.

Dans cette forme de réalisation de la diviseuse, les moyens d'entrainement comprennent une tige filetée 35 s'étendant sensiblement transversalement par rapport à l'axe de pivotement 17 entre le premier jeu de branches 14a et 14b et le deuxième jeu de branches 15a et 15b. Cette tige 35 est, en particulier, connectée aux extrémités inférieures 18 et 19 des branches par des pièces d'accouplement 36 filetées. Chacun des jeux de branches est connecté à son extrémité inférieure par un arbre 37, respectivement 38, sur lequel est prévu une pièce d'accouplement 36 de sorte à ce que, lorsque la tige 35 est entrainée autour de son axe longitudinal, les extrémités 18 et 19 des branches s'approchent ou s'éloignent l'une par rapport à l'autre.

Dans les formes de réalisation de la diviseuse décrites ci-dessus, la structure entrainé 13 comprend le fond 3 de la cuve 2. Alternativement, il est également possible que la structure entrainée 13 est formée par la grille 7. Dans une telle diviseuse, le dispositif d'entrainement peut être prévu au-dessus de la grille et les jeux de branches s'appuient alors contre une structure de support 16 qui s'étend, par exemple, également au-dessus de la grille.

Généralement, et comme montré aux figures, la structure entrainée 13 est supportée par l'extrémité supérieure de ladite première branche 14a,14b et par l'extrémité supérieure de la seconde branche 15a,15b.

Dans d'autres formes de réalisation de la diviseuse, suivant l'invention, qui ne sont pas représentées dans les figures, la structure entrainée 13 comprend la grille 7 du dispositif de division. Cette grille 7 est, par exemple, positionnée, dans ladite position éloignée, en-dessous du fond 3 de la cuve. Ce fond 3 présente des fentes qui correspondent aux positions des lames de coupe de la grille. Ceci permet aux lames 10 de traverser ces fentes et diviser la masse de pate 8 en pâtons 11 lorsque la grille 7 est déplacée en montant de la position éloignée vers la position rapprochée. Ainsi, ces lames peuvent traverser le fond de bas en haut pour permettre de diviser une masse de pate en pâtons qui est présent sur la face supérieure du fond 3. Dans ladite position éloignée, les lames de la grille s'étendent en-dessous de la face supérieure du fond, tandis que dans la position rapprochée, ces lames s'étendent à travers la pâte au-dessus du fond de la cuve. Dans cette dernière forme de réalisation de la diviseuse, le dispositif d'entrainement est par exemple présent en-dessous de la grille 7.

Un avantage important de la diviseuse, suivant l'invention, est le fait que la force exercée par les jeux de branches 14 et 15 sur la structure entrainée augmente graduellement au fur et à mesure que les branches se redressent. Ainsi, la force exercée par les lames de coupe 10 de la grille sur la pâte 8 à diviser s'accroit automatiquement et graduellement lorsque le fond et la grille se déplacent vers ladite position rapprochée.

Ceci est très utile étant donné que la force requise pour diviser la masse de pâte en pâtons, augmente à mesure que les lames de coupe de la grille s'enfoncent davantage dans la pâte. La pâte devenant de plus en plus compactée à l'endroit de lames de coupe, elle offre une résistance croissante lors de la division en pâtons.

Dans certaines formes de réalisation de la diviseuse, suivant l'invention, le dispositif d'entrainement comprend plusieurs branches articulées qui s'étendent l'une au-dessus de l'autre qui sont entrainées par des moyens d'entrainement communs.

Il est bien entendu que l'invention n'est pas limitée aux différentes formes de réalisation décrites ci-dessus, mais que d'autres variantes encore peuvent être envisagées sans sortir du cadre de la présente invention.

Il est par exemple possible que le nombre de branches varie. Ainsi, il est possible qu'un premier jeu de branches comprend seulement une branche, tandis que le deuxième jeu de branches comprend deux branches qui s'étendent de part et d'autre de la branche du premier jeu de branches.

La forme de branches peut également être modifiée. En général, chaque branche comprend, par exemple, un profil rigide allongé, une tige oblongue ou similaire. Mais, il est également possible que les jeux des branches comprennent, par exemple, une ou plusieurs branches en forme de X ou de Y. Selon d'autres variantes de la diviseuse une ou plusieurs branches peuvent être formées par une latte rigide plate.

Néanmoins dans la description ci-dessus, une diviseuse est décrite qui est entrainée manuellement par un levier 29, il est, par exemple, également possible que l'axe d'entrainement 28 du dispositif d'entrainement 12 est connecté à un moteur, par exemple un moteur électrique, qui permet d'entrainer la roue dentée 27 autour de cet axe pour faire monter ou descendre la structure entrainée 13. Alternativement, l'axe d'entrainement 28 peut coopérer avec une roue à main.

Il est également possible d'appliquer d'autres moyens d'entrainement que ceux décrites ci-dessus. Ainsi, les branches des jeux de branches peuvent être entrainées au moyen de câbles qui sont attachés aux extrémités des branches et qui sont enroulés ou déroulés d'une poulie pour approcher et éloigner ces extrémités pour faire monter ou descendre la structure entrainée.

## Revendications

1. Diviseuse de pâte destinée à découper une masse de pâte (8) en pâtons (11), comprenant un châssis (1) dans lequel sont prévus :
- une cuve (2) destinée à contenir une quantité de pâte (8) avec une ouverture d'accès (4) et un fond (3),
- un dispositif de division présentant une grille (7) formée par des lames de coupe (10) pour diviser la masse de pâte (8), présent sur le fond (3) de la cuve (2), en pâtons (11),
- un dispositif d'entrainement (12) permettant de déplacer le fond (3) et la grille (7) l'un par rapport à l'autre, suivant une direction sensiblement verticale, pour permettre de pousser les lames de coupe (10) de la grille (7) à travers la masse de pâte (8) pour former les pâtons (11),
dans laquelle le fond (3) et la grille (7) peuvent s'étendre sensiblement parallèlement l'un à l'autre et sont déplaçable entre une position éloignée dans laquelle la masse de pâte (8) peut reposer sur le fond (3) de la cuve (2) sans que les lames de coupe (10) ne traversent la masse de pate (8), et une position rapprochée dans laquelle les lames de coupe (10) traversent la masse de pâte (8) lorsque celle-ci repose sur le fond (3) de la cuve (2),
dans laquelle le dispositif d'entrainement (12) comprend au moins deux branches (14a,14b,15a,15b) placées entre une structure de support (16) solidaire du châssis (1) et une structure entrainée (13), dans laquelle cette structure entrainée (13) est supportée par une extrémité supérieure d'une première branche (14a,14b) et une extrémité supérieure d'une seconde branche (15a,15b) et comprend le fond (3) de la cuve (2) ou ladite grille (7), lesdites branches (14a,14b,15a,15b) se croisant sur un axe de pivotement (17) et étant interconnectées avec la possibilité de pivoter autour de cet axe (17), dans laquelle des moyens d'entrainement sont prévus permettant d'approcher ou d'éloigner une extrémité (18) de la première branche (14a,14b) par rapport à une extrémité (19) de la seconde branche (15a,15b) pour faire monter ou descendre ladite structure entrainée (13) pour déplacer le fond (3) et la grille (7) entre la position rapprochée et la position éloignée.

2. Diviseuse suivant la revendication 1, dans laquelle les moyens d'entrainement comprennent une roue dentée (27) présentant un axe central d'entrainement (28) et un élément cranté (26) dont l'un est fix par rapport au châssis (1) et l'autre est fixé à une extrémité d'une des branches, cette roue dentée (27) coopérant avec l'élément cranté (26) de sorte à ce que, lorsque la roue (27) est entrainée autour de son axe d'entrainement (28), l'extrémité (18,19) de la première branche (14a,14b) est déplacée par rapport à l'extrémité de la deuxième branche (15a,15b).

3. Diviseuse suivant la revendication 2, dans laquelle l'axe d'entrainement (28) de la roue dentée (27) s'étend à une position fixe par rapport au châssis (1), tandis que l'élément cranté (26) est solidaire d'au moins une branche.

4. Diviseuse suivant la revendication 2 ou 3, dans laquelle l'axe d'entrainement (28) de la roue dentée (27) s'étend parallèlement à l'axe de pivotement (17).

5. Diviseuse suivant l'une quelconques des revendications 2 à 4, dans laquelle l'élément cranté (26) comprend une crémaillère de sorte que la roue dentée (27) s'engrène avec la crémaillère.

6. Diviseuse suivant l'une quelconques des revendications 2 à 5, dans laquelle l'axe d'entrainement (28) est connecté à un levier (29) permettant d'entrainer la roue dentée (27) autour de cet axe d'entrainement (28) pour faire monter ou descendre ladite structure entrainée (13) manuellement.

7. Diviseuse suivant la revendication 6, dans laquelle un rapport de transmission de l'engrenage entre l'élément cranté (26) et la roue dentée (27) est choisi telle à ce que la structure entrainée (13) est déplacée suivant une distance verticale qui est au moins égale à la distance entre le fond (13) et un côté inférieur de la grille (7) dans ladite position éloignée, lorsque la roue dentée (27) ou le levier (29) sont tournés d'un angle inférieur à 180°, en particulier inférieur à 90°.

8. Diviseuse suivant l'une quelconques des revendications 2 à 7, dans laquelle l'axe d'entrainement (28) est connecté à un moteur permettant d'entrainer la roue dentée (27) autour de cet axe (28) pour faire monter ou descendre ladite structure entrainée (13).

9. Diviseuse suivant la revendication 1, dans laquelle lesdits moyens d'entrainement comprennent une tige filetée (35) s'étendant sensiblement transversalement par rapport à l'axe de pivotement (17) entre lesdites branches (14a,14b,15a,15b), cette tige (35) étant connectée aux branches (14a,14b,15a,15b) par des pièces d'accouplement (36) filetées de sorte à ce que, lorsque la tige (35) est entrainée autour de son axe longitudinal, les extrémités (18,19) des branches s'approchent ou s'éloignent l'une par rapport à l'autre, la tige filetée (35) étant éventuellement connectée à un levier ou un moteur permettant d'entrainer la tige autour de cet autour de son axe pour faire monter ou descendre ladite structure entrainée (13).

10. Diviseuse suivant l'une quelconque des revendications 1 à 9, dans laquelle une première branche (14a,14b) est réunie par une extrémité à la structure entrainée (13) au moyen d'un premier pivot (21) à position fixe par rapport à cette structure entrainée (13) et coopérant à l'autre extrémité (18) avec les moyens d'entrainement, une seconde branche (15a,15b) étant réunie par une extrémité (19) à la structure de support (16) au moyen d'un second pivot (19) à position fixe par rapport au châssis (1) et munie à l'autre extrémité d'un moyen de roulement (23) pour pouvoir se déplacer le long de la structure entrainée (13).

11. Diviseuse suivant la revendication 10, dans laquelle la structure entrainée (13) présente une glissière ou une fente (24) pour guider l'extrémité de la seconde branche (15a,15b), en particulier pour guider le moyen de roulement (23), lors de la monté ou descente de la structure entrainée (13).

12. Diviseuse suivant l'une quelconque des revendications 1 à 11, dans laquelle ladite structure entrainée (13) comprend le fond (3) de la cuve (2) qui est mobile verticalement par rapport au châssis (1), la grille (7) étant positionnée au-dessus du fond (3).

13. Diviseuse suivant l'une quelconque des revendications 1 à 11, dans laquelle ladite structure entrainée (13) comprend la grille (7), lorsque celui-ci est positionnée au-dessus du fond (3) parallèlement à ce dernier, cette grille (7) étant mobile verticalement par rapport au châssis (1) et le dispositif d'entrainement (12) étant prévu pour faire descendre la grille (7) par rapport au châssis (1) vers le fond (3) de la cuve (2).

14. Diviseuse suivant l'une quelconque des revendications 1 à 13, comprenant des moyens de maintien permettant de maintenir la structure entrainée (13) et la grille (7) dans ladite position rapprochée lorsque le dispositif d'entrainement (12) n'est pas actionné.

15. Diviseuse suivant la revendication 14, dans laquelle les moyens de maintien comprennent un ressort qui agit entre la première et la deuxième branche (14a,14b,15a,15b).

## Patentansprüche

1. Teigteiler, der dazu bestimmt ist, eine Teigmasse (8) in Teigstücke (11) zu schneiden, umfassend einen Rahmen (1), in dem Folgendes bereitgestellt ist:
- ein Behälter (2), der dazu bestimmt ist, eine Teigmenge (8) aufzunehmen, mit einer Zugangsöffnung (4) und einem Boden (3),
- eine Teilervorrichtung, die ein Gitter (7) aufweist, das durch Schneidklingen (10) gebildet ist, um die Teigmasse (8), die auf dem Boden (3) des Behälters (2) vorhanden ist, in Teigstücke (11) zu teilen,
- eine Antriebsvorrichtung (12), die es ermöglicht, den Boden (3) und das Gitter (7) in Bezug aufeinander in einer im Wesentlichen vertikalen Richtung zu bewegen, um es zu ermöglichen, die Schneidklingen (10) des Gitters (7) durch die Teigmasse (8) zu drücken, um die Teigstücke (11) zu bilden,
wobei sich der Boden (3) und das Gitter (7) im Wesentlichen parallel zueinander erstrecken können und zwischen einer entfernten Position, in der die Teigmasse (8) auf dem Boden (3) des Behälters (2) ruhen kann, ohne dass die Schneidklingen (10) die Teigmasse (8) durchqueren, und einer nahen Position, in der die Schneidklingen (10) die Teigmasse (8) durchqueren, wenn diese auf dem Boden (3) des Behälters (2) ruht, bewegbar sind,
wobei die Antriebsvorrichtung (12) mindestens zwei Arme (14a, 14b, 15a, 15b) umfasst, die zwischen einer fest mit dem Rahmen (1) verbundenen Tragstruktur (16) und einer angetriebenen Struktur (13) angeordnet sind, wobei diese angetriebene Struktur (13) von einem oberen Ende eines ersten Arms (14a, 14b) und einem oberen Ende eines zweiten Arms (15a, 15b) getragen wird und den Boden (3) des Behälters (2) oder des Gitters (7) umfasst, wobei sich die Arme (14a, 14b, 15a, 15b) auf einer Schwenkachse (17) kreuzen und mit der Möglichkeit verbunden sind, um diese Achse (17) zu schwenken, wobei Antriebseinrichtungen bereitgestellt sind, die es ermöglichen, ein Ende (18) des ersten Arms (14a, 14b) in Bezug auf ein Ende (19) des zweiten Arms (15a, 15b) anzunähern oder zu entfernen, um die angetriebene Struktur (13) anzuheben oder abzusenken, um den Boden (3) und das Gitter (7) zwischen der angenäherten Position und der entfernten Position zu bewegen.

2. Teilermaschine nach Anspruch 1, wobei die Antriebseinrichtungen ein Zahnrad (27) umfassen, das eine mittlere Antriebsachse (28) und ein gezahntes Element (26) aufweist, wovon eines in Bezug auf den Rahmen (1) feststehend ist und das andere an einem Ende eines der Arme befestigt ist, wobei dieses Zahnrad (27) mit dem gezahnten Element (26) zusammenwirkt, sodass, wenn das Rad (27) um seine Antriebsachse (28) angetrieben wird, das Ende (18, 19) des ersten Arms (14a, 14b) in Bezug auf das Ende des zweiten Arms (15a, 15b) bewegt wird.

3. Teilermaschine nach Anspruch 2, wobei sich die Antriebsachse (28) des Zahnrads (27) zu einer festen Position in Bezug auf den Rahmen (1) erstreckt, während das gezahnte Element (26) fest mit mindestens einem Arm verbunden ist.

4. Teilermaschine nach Anspruch 2 oder 3, wobei sich die Antriebsachse (28) des Zahnrads (27) parallel zu der Schwenkachse (17) erstreckt.

5. Teilermaschine nach einem der Ansprüche 2 bis 4, wobei das gezahnte Element (26) eine Zahnstange umfasst, sodass das Zahnrad (27) mit der Zahnstange eingreift.

6. Teilermaschine nach einem der Ansprüche 2 bis 5, wobei die Antriebsachse (28) mit einem Hebel (29) verbunden ist, der es ermöglicht, das Zahnrad (27) um diese Antriebsachse (28) anzutreiben, um die angetriebene Struktur (13) manuell anzuheben oder abzusenken.

7. Teilermaschine nach Anspruch 6, wobei ein Übersetzungsverhältnis des Getriebes zwischen dem gezahnten Element (26) und dem Zahnrad (27) gewählt ist, sodass die angetriebene Struktur (13) um einen vertikalen Abstand bewegt wird, der mindestens gleich wie der Abstand zwischen dem Boden (13) und einer Unterseite des Gitters (7) in der entfernten Position ist, wenn das Zahnrad (27) oder der Hebel (29) um einen Winkel von weniger als 180°, insbesondere weniger als 90°, gedreht werden.

8. Teilermaschine nach einem der Ansprüche 2 bis 7, wobei die Antriebsachse (28) mit einem Motor verbunden ist, der es ermöglicht, das Zahnrad (27) um diese Achse (28) anzutreiben, um die angetriebene Struktur (13) anzuheben oder abzusenken.

9. Teilermaschine nach Anspruch 1, wobei die Antriebseinrichtungen eine Gewindestange (35) umfassen, die sich im Wesentlichen quer zu der Schwenkachse (17) zwischen den Armen (14a, 14b, 15a, 15b) erstreckt, wobei diese Stange (35) durch Kupplungsstücke (36) mit Gewinde mit den Armen (14a, 14b, 15a, 15b) verbunden ist, sodass, wenn die Stange (35) um ihre Längsachse angetrieben wird, die Enden (18, 19) der Arme sich einander nähern oder sich voneinander entfernen, wobei die Gewindestange (35) optional mit einem Hebel oder einem Motor verbunden ist, der es ermöglicht, die Stange um diese um ihre Achse anzutreiben, um die angetriebene Struktur (13) anzuheben oder abzusenken.

10. Teilermaschine nach einem der Ansprüche 1 bis 9, wobei ein erster Arm (14a, 14b) an einem Ende mittels eines ersten Drehzapfens (21) der in Bezug auf diese angetriebene Struktur (13) in einer festen Position ist und an dem anderen Ende (18) mit den Antriebseinrichtungen zusammenwirkt, mit der angetriebenen Struktur (13) verbunden ist, wobei ein zweiter Arm (15a, 15b) an einem Ende (19) mittels eines zweiten Drehzapfens (19), der in Bezug auf den Rahmen (1) in einer festen Position ist und an dem anderen Ende mit einer Rolleinrichtung (23) ausgestattet ist, um sich entlang der angetriebenen Struktur (13) bewegen zu können, mit der Tragstruktur (16) verbunden ist.

11. Teilermaschine nach Anspruch 10, wobei die angetriebene Struktur (13) eine Schiene oder einen Schlitz (24) aufweist, um das Ende des zweiten Arms (15a, 15b) zu führen, insbesondere um die Rolleinrichtung (23) während des Anhebens oder Absenkens der angetriebenen Struktur (13) zu führen.

12. Teilermaschine nach einem der Ansprüche 1 bis 11, wobei die angetriebene Struktur (13) den Boden (3) des Behälters (2) umfasst, der in Bezug auf den Rahmen (1) vertikal beweglich ist, wobei das Gitter (7) über dem Boden (3) positioniert ist.

13. Teilermaschine nach einem der Ansprüche 1 bis 11, wobei die angetriebene Struktur (13) das Gitter (7) umfasst, wenn dieses über dem Boden (3) parallel dazu positioniert ist, wobei dieses Gitter (7) in Bezug auf den Rahmen (1) vertikal beweglich ist und die Antriebsvorrichtung (12) bereitgestellt ist, um das Gitter (7) in Bezug auf den Rahmen (1) in Richtung des Bodens (3) des Behälters (2) abzusenken.

14. Teilermaschine nach einem der Ansprüche 1 bis 13, umfassend Halteeinrichtungen, die es ermöglichen, die angetriebene Struktur (13) und das Gitter (7) in der nahen Position zu halten, wenn die Antriebsvorrichtung (12) nicht betätigt wird.

15. Teilermaschine nach Anspruch 14, wobei die Halteeinrichtungen eine Feder umfassen, die zwischen dem ersten und dem zweiten Arm (14a, 14b, 15a, 15b) wirkt.

## Claims

1. Dough divider for cutting a mass of dough (8) into pieces of dough (11), comprising a frame (1) in which are provided:
- a bowl (2) for containing a quantity of dough (8) with an access opening (4) and a bottom (3),
- a dividing device with a grid (7) consisting of cutting blades (10) for dividing the mass of dough (8), present on the bottom (3) of the bowl (2), into pieces of dough (11),
- a drive device (12) for moving the bottom (3) and the grid (7) relative to each other in a substantially vertical direction to allow the cutting blades (10) of the grid (7) to be pushed through the mass of dough (8) so as to form the pieces of dough (11),
wherein the bottom (3) and the grid (7) can extend substantially parallel to each other and can be moved between a remote position in which the mass of dough (8) can rest on the bottom (3) of the bowl (2) without the cutting blades (10) passing through the mass of dough (8), and a raised position in which the cutting blades (10) pass through the mass of dough (8) when the latter rests on the bottom (3) of the bowl (2),
wherein the drive device (12) comprises at least two arms (14a,14b,15a,15b) placed between a support structure (16) secured to the frame (1) and a driven structure (13), wherein this driven structure (13) is supported by an upper end of a first arm (14a,14b) and an upper end of a second arm (15a,15b) and comprises the bottom (3) of the bowl (2) or said grid (7), said arms (14a,14b,15a,15b) intersecting on a pivot shaft (17) and being interconnected such that they can pivot around said shaft (17), wherein drive means are provided making it possible to approach or move away one end (18) of the first arm (14a,14b) relative to one end (19) of the second arm (15a,15b) in order to raise or lower said driven structure (13) to move the bottom (3) and the grid (7) between the raised position and the remote position.

2. Divider according to claim 1, wherein the drive means comprise a cog wheel (27) having a central drive shaft (28) and a notched element (26), one of which is fixed to the frame (1) while the other one is fixed to a far end of one of the arms, said cog wheel (27) cooperating with the notched element (26) such that, when the wheel (27) is driven about its drive shaft (28), the far end (18,19) of the first arm (14a,14b) will be moved relative to the far end of the second arm (15a,15b).

3. Divider according to claim 2, wherein the drive shaft (28) of the cog wheel (27) extends in a fixed position relative to the frame (1), whereas the notched element (26) is secured to at least one arm.

4. Divider according to claim 2 or 3, wherein the drive shaft (28) of the cog wheel (27) extends parallel to the pivot shaft (17).

5. Divider according to any one of claims 2 to 4, wherein the notched element (26) comprises a rack such that the cog wheel (27) engages with the rack.

6. Divider according to any one of claims 2 to 5, wherein the drive shaft (28) is connected to a lever (29) making it possible to drive the cog wheel (27) about said drive shaft (28) in order to raise or lower the driven structure (13) manually.

7. Divider according to claim 6, wherein a transmission ratio of the gear between the notched element (26) and the cog wheel (27) is selected such that the driven structure (13) is moved over a vertical distance which is at least equal to the distance between the bottom (13) and a lower side of the grid (7) in said remote position, when the cog wheel (27) or the lever (29) are rotated by an angle of less than 180°, in particular less than 90°.

8. Divider according to any one of claims 2 to 7, wherein the drive shaft (28) is connected to a motor so as to make it possible to drive the cog wheel (27) about said shaft (28) in order to raise or lower said driven structure (13).

9. Divider according to claim 1, wherein said drive means comprise a threaded rod (35) extending substantially transversely relative to the pivot shaft (17) between said arms (14a,14b,15a,15b), this rod (35) being connected to the arms (14a,14b,15a,15b) by threaded coupling pieces (36) so that, when the rod (35) is driven about its longitudinal axis, the far ends (18,19) of the arms will move towards or away from each other, the threaded rod (35) being optionally connected to a lever or a motor for driving the rod about its axis to raise or lower said driven structure (13).

10. Divider according to any one of claims 1 to 9, wherein a first arm (14a,14b) is joined by one far end to the driven structure (13) by means of a first pivot (21) in a fixed position relative to said driven structure (13) and cooperating at the other far end (18) with the drive means, a second arm (15a,15b) being joined by one far end (19) to the support structure (16) by means of a second pivot (19) in a fixed position relative to the frame (1) and provided at the other end with a rolling means (23) so as to be able to move along the driven structure (13).

11. Divider according to claim 10, wherein the driven structure (13) has a slide or a slot (24) for guiding the far end of the second arm (15a,15b), in particular for guiding the rolling means (23) during the upward or downward movement of the driven structure (13).

12. Divider according to any one of claims 1 to 11, wherein said driven structure (13) comprises the bottom (3) of the bowl (2) which can move vertically relative to the frame (1), the grid (7) being positioned above the bottom (3).

13. Divider according to any one of claims 1 to 11, wherein said driven structure (13) comprises the grid (7), when the latter is positioned above the bottom (3) parallel to the latter, said grid (7) being vertically movable relative to the frame (1) and the drive device (12) being provided to lower the grid (7) relative to the frame (1) towards the bottom (3) of the bowl (2).

14. Divider according to any one of claims 1 to 13, comprising holding means for holding the driven structure (13) and the grid (7) in said raised position when the drive device (12) is not in operation.

15. Divider according to claim 14, wherein the holding means comprise a spring acting between the first and second arms (14a,14b,15a,15b).
